# DEMANDE DE BREVET EUROPEEN

(11) **EP 1 172 775 A1**
(43) Date de publication de la demande: **16.01.2002**
(21) Numéro de dépôt: 00870162.5
(22) Date de dépôt: 10.07.2000
(51) Int. Cl.: G07F 7/10, G07C 9/00

(54) **Procédé de protection d'un accès à un domaine sécurisé**

(71) Demandeur: PROTON WORLD INTERNATIONAL (PWI), 1030 Bruxelles (BE)
(72) Inventeur: Carbonnelle, M. Cédric, 1200 Bruxelles (BE)
(74) Mandataire: Claeys, Pierre

(57) **Abrégé**

Procédé de protection d'un accès à un domaine sécurisé, en particulier un domaine de données numériques confidentielles dans un système informatique, comprenant une utilisation d'un numéro d'identification personnel (PIN) pour un individu auquel l'accès au domaine est autorisé, le procédé comprenant, pour la production du numéro d'identification personnel, une détermination d'un numéro typique attribué à l'individu, une composition d'un numéro secret propre à l'individu, et une combinaison du numéro typique attribué à l'individu et du numéro secret de l'individu pour former son numéro d'identification personnel et, pour l'accès au domaine sécurisé, une vérification dudit numéro d'identification personnel, le numéro typique étant avantageusement tiré de ou relié à un ensemble de données, notamment anthropométriques, propres à l'individu et enregistrées sur un support confié à l'individu.

## Description

La présente invention concerne un procédé de protection d'un accès à un domaine sécurisé, en particulier un domaine de données numériques confidentielles dans un système informatique, le procédé comprenant une utilisation d'un numéro d'identification personnel pour un individu auquel l'accès au domaine est autorisé. Pour mémoire, un tel numéro est connu dans les métiers concernés sous la dénomination anglaise de "Personal Identification Number" ou son abréviation "PIN".

Divers moyens sont mis en oeuvre pour sécuriser des accès, que ce soit à des locaux, à des informations informatisées comme celles de comptes en banque, à du payement par des moyens électroniques ou à des retraits d'argent par des distributeurs de billets, etc.

Puisque dans ces cas il n'y a en principe pas de contact de personne à personne et donc pas de possibilité de reconnaissance ou de contrôle d'identité, il faut chercher à améliorer une authentification non ambiguë de l'autorisation d'accès qu'a ou n'a pas un individu, des individus non autorisés tentant constamment de leur côté de forcer illicitement ces accès.

Il est par exemple connu d'utiliser un code secret de quatre chiffres en ce qui concerne des cartes pour des transactions bancaires. Cela ne donne que 9999 différentes possibilités de codes. C'est-à-dire qu'en moyenne, en Belgique, 700 individus pourraient avoir le même code secret qui n'est donc pas aussi personnel qu'on peut le croire.

Augmenter le nombre de chiffres de ce code secret augmente la difficulté de le retenir et de le reproduire correctement à chaque utilisation, en particulier pour des personnes âgées. De toute façon, un code secret, aussi long soit-il, peut être espionné, copié et utilisé frauduleusement.

Des solutions au problème d'authentification font appel à une utilisation de données anthropométriques particulières et typiques d'un individu par rapport aux autres, comme celles d'une empreinte digitale, d'une analyse de la voix, d'une image de l'iris, d'une analyse de l'ADN, et d'autres qui diffèrent d'un individu à l'autre.

La présente invention a pour but d'apporter une nouvelle solution au problème ci-dessus en donnant un moyen d'accroître le nombre de chiffres du numéro d'identification personnel d'un individu, sans que celui-ci soit obligé de mémoriser et de reproduire un nombre trop long. L'invention doit procurer un accroissement de la dimension d'un numéro d'identification personnel d'en principe quatre chiffres en y ajoutant un nombre complémentaire de chiffres qui pourrait être avantageusement de huit pour respecter la norme ISO 9564-1 qui autorise un maximum de douze chiffres.

A cet effet, le procédé de l'invention prévoit, pour la production du numéro d'identification personnel (PIN), une détermination d'un numéro typique (BP) attribué à l'individu, une composition d'un numéro secret (UP) propre à l'individu, et une combinaison du numéro typique (BP) attribué à l'individu et du numéro secret (UP) de l'individu pour former son numéro d'identification personnel (PIN). L'invention prévoit, pour l'accès au domaine sécurisé, une vérification dudit numéro d'identification personnel (PIN). Une manière d'attribuer ce numéro typique (BP) à l'individu peut consister à inscrire ce numéro dans une carte à puce électronique que l'on confie à l'individu, en tant que passeport d'accès.

La combinaison peut consister en une concaténation du numéro typique (BP) attribué à l'individu et du numéro secret (UP) à la suite l'un de l'autre dans un ordre choisi. Le numéro secret (UP) comporte typiquement quatre chiffres.

Suivant un mode de réalisation de l'invention, la détermination du numéro typique (BP) attribué à l'individu comporte (-) un établissement d'un ensemble de données (BPR) propres à cet individu, (-) un traitement de l'ensemble de données (BPR) par une fonction de hachage (ou de compression) (HF) choisie pour en obtenir un numéro de données (HBP), propres à l'individu, de huit octets, (-) une détermination d'un facteur de conversion (BVR), et (-) une combinaison, à l'aide d'une fonction OU-Exclusif (XOR), du numéro de données (HBP) et du facteur de conversion (BVR) pour en obtenir le numéro typique (BP) attribué à l'individu.

En particulier, les données de l'ensemble de données propres (BPR) sont des données anthropométriques de l'individu.

Suivant un mode avantageux de l'invention, le procédé comprend (-) un enregistrement de l'ensemble de données (BPR) sur/dans un support confié à l'individu, (-) une attribution d'un numéro d'identification (PID, HID) au support, (-) une sélection d'une valeur secrète principale (MBP), (-) une sélection d'une fonction à sens unique (OWF1) dans laquelle sont entrées la valeur secrète principale (MBP) et le numéro d'identification (PID, HID) du support et dont le résultat est ledit numéro typique (BP) attribué à l'individu, (-) une combinaison, à l'aide d'une fonction OU-Exclusif (XOR), des numéro typique (BP) et numéro de données (HBP) de l'individu pour en obtenir le facteur de conversion (BVR) susdit, et (-) une utilisation ultérieure dudit facteur de conversion (BVR) pour transformer le numéro de données (HBP) de l'individu en numéro typique (BP) attribué à celui-ci.

Pour en augmenter davantage la sécurité, le procédé de l'invention peut comprendre encore (-) une sélection d'une clé de chiffrement principale (MBK), (-) une sélection d'une fonction à sens unique (OWF2) dans laquelle sont entrées la clé de chiffrement principale (MBK) et le numéro d'identification (PID, HID) du support et dont le résultat est une clé de chiffrement dérivée (DBK), et (-) une utilisation de la clé de chiffrement dérivée (DBK) pour chiffrer le facteur de conversion (BVR) en un facteur de conversion chiffré (EBV) et déchiffrer celui-ci.

Dans un mode d'application, le procédé suivant l'invention comprend de plus (-) un enregistrement sur/dans le support du facteur de conversion chiffré (EBV), (-) un déchiffrement, à l'aide de la clé de chiffrement dérivée (DBK), du facteur de conversion chiffré (EBV) enregistré, (-) une combinaison dans une fonction OU-Exclusif (XOR) du facteur de conversion déchiffré (BVR) et du numéro de données (HBP) de l'individu, (-) une utilisation du résultat de la combinaison en tant que numéro typique (BP) attribué à l'individu, et (-) une combinaison de ce numéro typique (BP) attribué à l'individu et de son numéro secret propre (UP) donnant son numéro d'identification personnel (PIN).

Dans le même concept inventif que ci-dessus, l'invention prévoit aux mêmes fins un procédé comprenant, pour un individu autorisé à accéder à un domaine, (-) un établissement d'un ensemble de données (BPR) propres à cet individu, (-) un enregistrement de l'ensemble de données (BPR) sur/dans un support confié à l'individu, (-) une attribution d'un numéro d'identification (PID, HID) au support, (-) un traitement de l'ensemble de données (BPR) par une fonction de hachage (HF) choisie pour en obtenir un numéro de données (HBP), de huit chiffres, (-) une sélection d'une valeur secrète principale (MBP), (-) une sélection d'une fonction à sens unique (OWF1) dans laquelle sont entrées la valeur secrète principale (MBP) et le numéro d'identification (PID, HID) du support et dont le résultat est un numéro typique (BP) attribué à l'individu, (-) une combinaison, à l'aide d'une fonction OU-Exclusif (XOR), du numéro typique (BP) attribué à l'individu et du numéro de données (HBP) pour en obtenir un facteur de conversion (BVR), (-) une utilisation ultérieure dudit facteur de conversion (BVR) pour transformer par une fonction OU-Exclusif (XOR) le numéro de données (HBP) de l'individu en numéro typique (BP) attribué à l'individu, et (-) une utilisation dudit numéro typique (BP) comme numéro d'identification personnel (PIN) de l'individu.

Pour former le numéro d'identification personnel (PIN) de l'individu, il peut être prévu avantageusement une composition d'un numéro secret (UP) propre à l'individu, et une combinaison du numéro typique (BP) attribué à l'individu et du numéro secret (UP) de l'individu pour former son numéro d'identification personnel (PIN) d'accès au domaine.

Dans un mode de réalisation dudit procédé, cette combinaison peut consister en une concaténation du numéro typique (BP) et du numéro secret (UP) à la suite l'un de l'autre dans un ordre choisi.

Suivant un mode avantageux de réalisation, ledit procédé peut comprendre en outre (-) une sélection d'une clé de chiffrement principale (MBK), (-) une sélection d'une fonction à sens unique (OWF2) dans laquelle sont entrées la clé de chiffrement principale (MBK) et le numéro d'identification (PID, HID) du support et dont le résultat est une clé de chiffrement dérivée (DBK), (-) une utilisation de la clé de chiffrement dérivée (DBK) pour chiffrer le facteur de conversion (BVR) en un facteur de conversion chiffré (EBV) et déchiffrer celui-ci, (-) un enregistrement du facteur de conversion chiffré (EBV) sur/dans ledit support, et (-) un déchiffrement, à l'aide de la dé de chiffrement dérivée (DBK), du facteur de conversion chiffré (EBV) enregistré, pour obtenir le facteur de conversion (BVR) à utiliser.

D'autres détails et particularités de l'invention ressortiront des revendications secondaires et de la description des dessins qui sont annexés au présent mémoire et qui illustrent, à titre d'exemples non limitatifs, le procédé suivant l'invention.

La figure 1 montre un premier schéma simplifié de combinaison pour obtenir un numéro d'identification personnel.

La figure 2 montre un second schéma simplifié de combinaison pour obtenir un numéro d'identification personnel.

La figure 3 montre un premier schéma simplifié pour obtenir un numéro typique attribué à un individu.

La figure 4 montre un second schéma simplifié pour obtenir un numéro typique attribué à un individu.

La figure 5 montre un schéma simplifié pour obtenir un facteur de conversion.

La figure 6 montre un schéma simplifié pour chiffrer/déchiffrer un facteur de conversion.

La figure 7 montre un schéma simplifié pour obtenir un facteur de conversion chiffré.

La figure 8 montre un schéma simplifié d'un dispositif pour la mise en oeuvre de l'invention.

Dans les différentes figures, les mêmes notations de référence désignent des éléments identiques ou analogues.

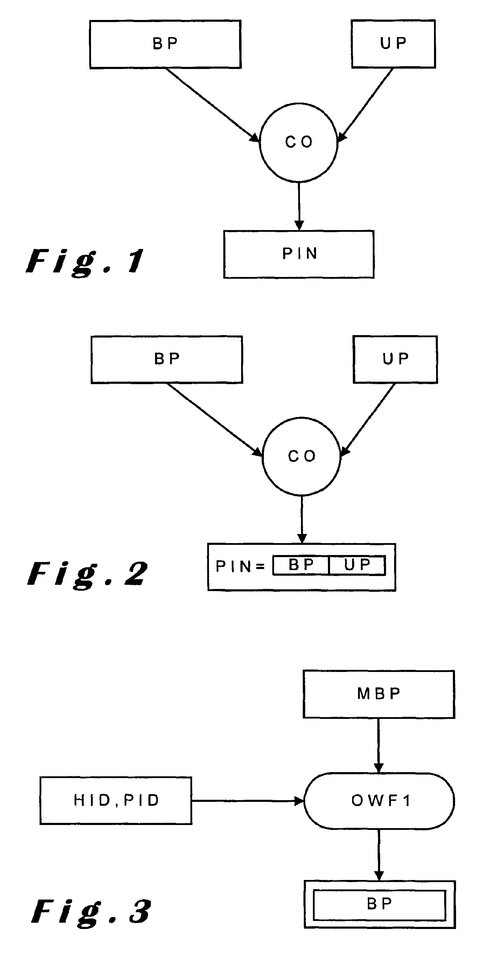

Dans le procédé de l'invention, destiné à la protection d'un accès à un domaine sécurisé, on détermine (figure 1) un numéro typique BP respectif attribué à chaque individu qui reçoit une autorisation d'accès, on compose un numéro secret UP propre à l'individu, ou il le compose lui-même, et l'on combine en CO le numéro typique BP attribué à l'individu et son numéro secret UP pour former son numéro d'identification personnel PIN. Comme cela sera expliqué ci-après, le numéro typique BP est lié à l'individu et choisi pour ne pas devoir être mémorisé par celui-ci. Le numéro secret UP est du type à mémoriser et comporte à cet effet quatre chiffres.

Pour accéder au domaine sécurisé, l'individu doit faire vérifier une coïncidence entre lui-même et son numéro d'identification personnel PIN.

Ladite combinaison peut consister (figure 2) en une concaténation du numéro typique BP attribué à l'individu et du numéro secret UP à la suite l'un de l'autre dans un ordre choisi. Cette combinaison pourrait aussi consister en une imbrication d'un des numéros BP, UP entre deux parties de l'autre.

La détermination du numéro typique BP attribué à l'individu, proposée par l'invention est faite avantageusement par deux voies.

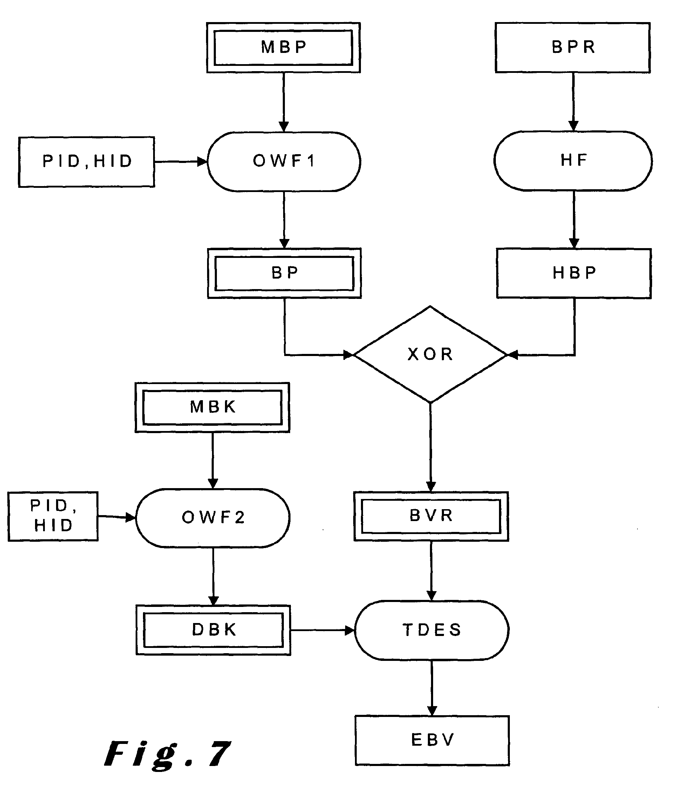

Dans le cas d'exemple déjà cité d'une carte à puce électronique CC, (figure 7) confiée à l'individu, celle-ci a reçu un numéro d'identification PID, HID qui est formé par exemple d'un numéro d'identification d'un porte-monnaie électronique (Purse IDentification = PID) que comporte cette carte et d'un numéro d'identification d'un système informatique de gestion (Host IDentification = HID) de la carte et donc dudit porte-monnaie.

Une des voies peut consister alors (figure 3) à choisir une valeur secrète principale MBP, par exemple commune à un ensemble de cartes appartenant à un même système, et à sélectionner une fonction à sens unique OWF1 dans laquelle sont entrées la valeur secrète principale MBP et le numéro d'identification PID, HID de la carte CC, et dont le résultat est considéré comme étant ledit numéro typique BP attribué à l'individu par l'intermédiaire de sa carte CC.

A partir de cette figure 3, tout numéro ou élément à considérer comme secret en encadré d'un double trait.

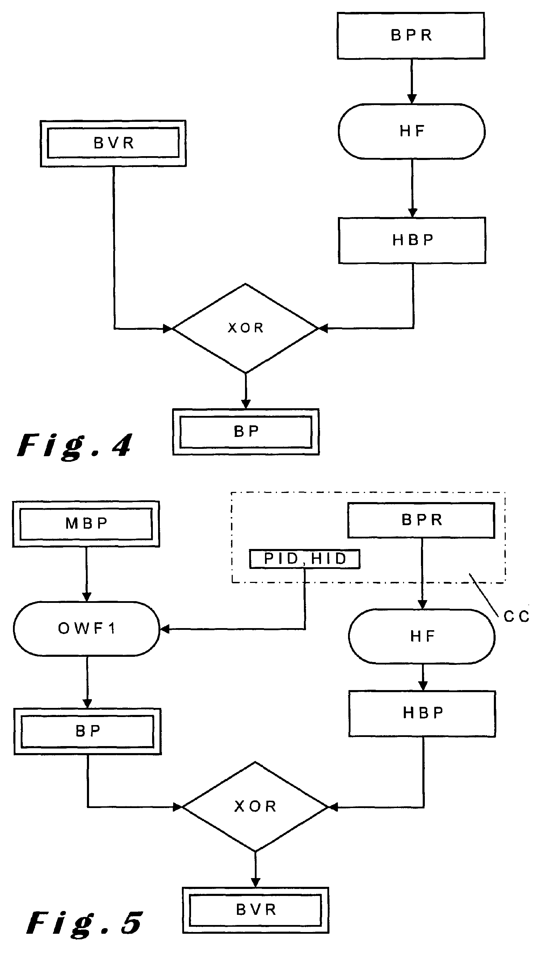

L'autre voie peut comporter avantageusement (figure 4) un établissement d'un ensemble de données BPR propres à cet individu, cet ensemble ayant une taille choisie pour être très particularisant pour l'individu. Cet ensemble de données BPR est alors traité par une fonction de hachage HF choisie pour en obtenir un numéro de données HBP, propres à l'individu, de huit octets. Un facteur de conversion BVR est déterminé comme ci-après et est combiné, à l'aide d'une fonction OU-Exclusif XOR, au numéro de données HBP pour en obtenir le numéro typique BP attribué à l'individu, à utiliser pour composer son numéro d'identification PIN.

Les données de l'ensemble de données BPR propres à l'individu sont avantageusement des données anthropométriques de celui-ci. Dans ce cas, le numéro d'identification PIN de l'individu sera utilisé en même temps que ses données anthropomorphiques pour en vérifier la coïncidence et donc son autorisation d'accès.

Le procédé de l'invention peut comprendre un enregistrement (figure 5) de l'ensemble de données BPR propres à l'individu dans la mémoire de la carte CC qui est confiée ou attribuée à cet individu.

Afin d'obtenir le facteur de conversion BVR susdit (figure 5), on réalise, à l'aide d'une fonction OU-Exclusif XOR, une combinaison du numéro typique BP obtenu suivant le schéma de la figure 3 et du numéro de données HBP de l'individu. On peut utiliser alors ultérieurement ce facteur de conversion BVR pour transformer le numéro de données HBP de l'individu en numéro typique BP attribué à celui-ci et vice versa suivant les besoins. Il apparaît ainsi que le facteur de conversion BVR permet d'associer deux numéros HBP et BP initialement indépendants.

Le numéro typique BP peut en fait être donné, sans tenir compte du destinataire, à une carte CC, suivant le schéma de la figure 3, lorsque celle-ci est particularisée par un numéro d'identification PID, HID et pour un système défini par une valeur secrète principale MBP.

Le numéro de données HBP provient quant à lui de ce que l'on peut appeler un enrôlement en fonction de l'individu auquel est confié la carte CC. Lors de cet enrôlement, l'individu est présent pour enregistrer ses caractéristiques anthropométriques, choisies pour le système, à mettre sous la forme de l'ensemble BPR dans la carte CC et à utiliser pour en tirer le numéro de données HBP.

Il ressort de ce qui précède qu'une carte CC n'a qu'un numéro typique BP et que chaque carte a le sien. Un individu qui détient plusieurs cartes a donc plusieurs numéros typiques BP.

Sur une même carte CC peuvent être enregistrés divers ensembles BPR de données anthropométriques différentes comme un ensemble BPR1 pour des empreintes digitales, un ensemble distinct BPR2 pour l'iris oculaire, un ensemble distinct BPR3 pour la voix. Chaque ensemble a dans ce cas en association, enregistré également dans la carte CC, un facteur de conversion propre respectif BVR1, BVR2, BVR3 qui, combiné au numéro de données respectif HBP1, HBP2, HBP3 obtenu suivant le schéma de la figure 4, ne peut donner, suivant l'invention, qu'un seul et même numéro typique BP.

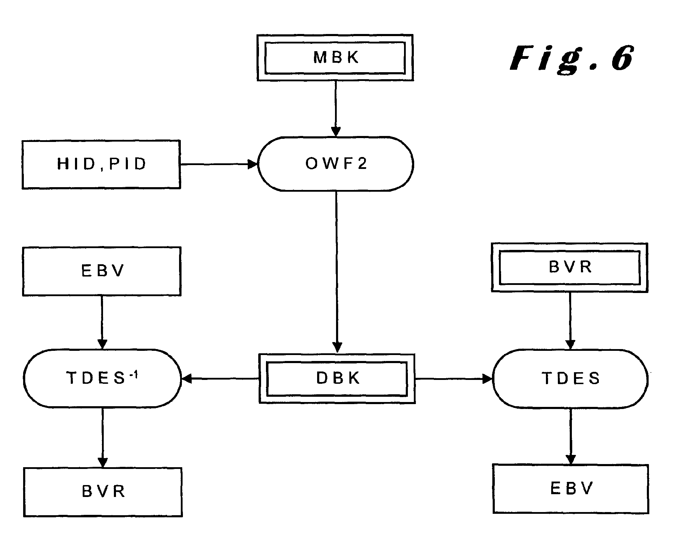

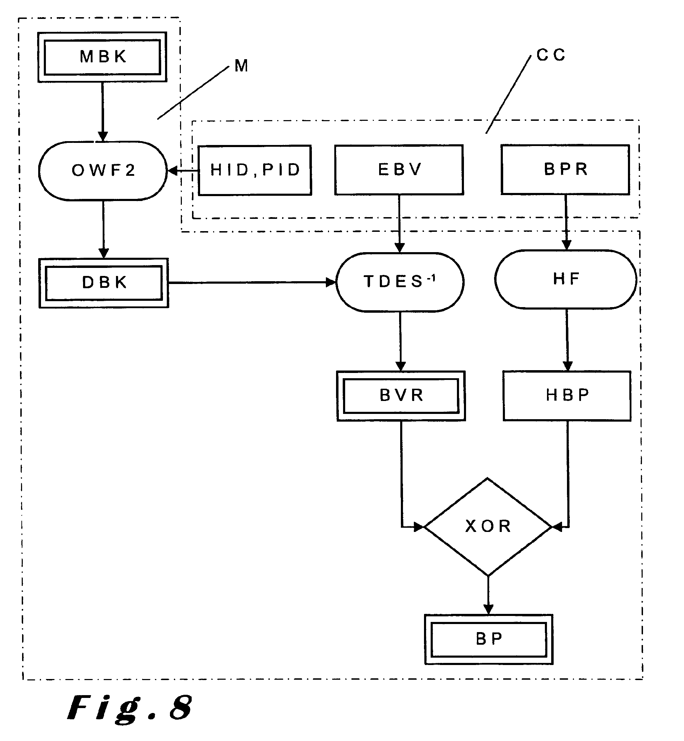

Dans une carte CC ci-dessus (figure 8), les données sont enregistrées dans des fichiers considérés comme publics. Pour la sécurité du système, il est préférable de chiffrer le facteur de conversion BVR en EBV avant son enregistrement dans la carte CC et de le déchiffrer à chaque utilisation, lors d'un dialogue entre la carte CC et une machine M agencée pour lire cette carte. On peut prévoir à cet effet (figures 6 et 8) une sélection d'une clé de chiffrement principale MBK, et une sélection d'une fonction à sens unique OWF2 dans laquelle sont entrées la clé de chiffrement principale MBK et le numéro d'identification PID, HID de la carte CC et dont le résultat est une clé de chiffrement dérivée DBK. On utilise alors la clé de chiffrement dérivée DBK pour chiffrer le facteur de conversion BVR en un facteur de conversion chiffré EBV (à droite de la figure 6) et déchiffrer celui-ci en le facteur de conversion BVR (à gauche de la figure 6) selon le sens d'application d'une opération connue de l'homme de métier sous le vocable TDES ou Triple DES ou Triple Data Encryption Standard, soit une norme avancée de chiffrement de données (et sa réciproque de déchiffrement TDES⁻¹) connue dans le métier.

Dans le cas cité de trois ensembles de données distincts BPR1, BPR2, BPR3, on peut prévoir pour chacun une dé principale de chiffrement distincte MBK1, MBK2 et MBK3 respectivement, tenue secrète pour les gestionnaires des autres ensembles.

On peut alors effectuer sur/dans la carte CC un enregistrement du facteur de conversion chiffré EBV et, lors d'une lecture de la carte CC, un déchiffrement, à l'aide de la clé de chiffrement dérivée DBK, du facteur de conversion chiffré EBV enregistré, pour en obtenir le facteur de conversion BVR, et une combinaison dans une fonction OU-Exclusif XOR du facteur de conversion déchiffré BVR et du numéro de données HBP de l'individu.

Le résultat de la combinaison est alors utilisé en tant que numéro typique BP attribué à l'individu, et une combinaison de ce numéro typique BP et du numéro secret propre UP du même individu donne son numéro d'identification personnel PIN.

Par le moyen de la clé de chiffrement MBK et de sa dérivée, on arrive à garder secret le numéro typique BP. Seule un machine M autorisée possédera la clé de chiffrement MBK qui permet d'obtenir (figure 8) en fin de compte ce numéro typique BP.

Dans le même concept inventif que celui qui est décrit ci-dessus, (figure 5) on peut établir un ensemble de données BPR propres à un individu, faire un enregistrement de l'ensemble de données BPR sur/dans un support confié à l'individu, tel que la carte CC précitée qui possède son numéro d'identification PID, HID. On fait une sélection d'une valeur secrète principale MBP et une sélection d'une fonction à sens unique OWF1 dans laquelle sont entrées la valeur secrète principale MBP et le numéro d'identification PID, HID de la carte CC et dont le résultat est un numéro typique BP attribué à l'individu. On fait un traitement de l'ensemble de données BPR par une fonction de hachage HF choisie pour en obtenir un numéro de données HBP de huit chiffres. On combine ensuite, à l'aide d'une fonction OU-Exclusif XOR, le numéro typique BP attribué à l'individu et le numéro de données HBP pour en obtenir un facteur de conversion BVR.

Lors d'une lecture de la carte CC pour vérifier si un accès peut être donné, (figure 4) on soumet à nouveau l'ensemble de données BPR à la fonction de hachage HF pour en tirer le numéro de données HBP. On utilise le facteur de conversion BVR pour transformer par une fonction OU-Exclusif XOR le numéro de données HBP de l'individu en numéro typique BP attribué à l'individu, et on peut éventuellement utiliser ledit numéro typique BP de l'individu comme numéro d'identification personnel PIN de l'individu.

Avantageusement cependant, pour les motifs invoqués plus haut et pour sécuriser davantage le procédé, on préfère organiser une composition d'un numéro secret UP propre à l'individu, soit par celui-ci soit par un générateur aléatoire, et une combinaison des numéro typique BP et numéro secret UP de l'individu pour former son numéro d'identification personnel PIN d'accès au domaine. Des exemples de combinaisons ont déjà été donnés.

II doit être entendu que l'invention n'est nullement limitée aux formes de réalisation décrites et que bien des modifications peuvent être apportées à ces dernières sans sortir du cadre des revendications.

La figure 7 montre les opérations prévues dans l'invention pour obtenir un facteur de conversion chiffré EBV.

La figure 8 montre une machine M adaptée pour lire les cartes CC décrites ci-dessus en même temps qu'elle fait par exemple un ou des relevés anthropométriques du genre empreintes digitales, iris de l'oeil, etc... d'individus qui lui présentent leur carte CC personnelle.

Dans la machine M peuvent être mémorisés une clé de chiffrement principale MBK (de 48 octets), une fonction à sens unique OWF2, une fonction de déchiffrement TDES⁻¹, une fonction de hachage HF et une fonction OU-Exclusif XOR.

Dans chaque carte CC sont mémorisés un numéro d'identification PID, HID (8 octets), un facteur de conversion chiffré EBV (8 octets) et un ensemble de données anthropomorphiques BPR (200 à 700 octets) dans le présent exemple.

Lorsqu'une carte CC est présentée en lecture à la machine M, la clé de chiffrement principale MBK et le numéro d'identification PID, HID de la carte sont entrés dans la fonction à sens unique OWF2 qui en tire la clé de chiffrement dérivée DBK (16 octets). Celle-ci et le facteur de conversion chiffré EBV sont introduits dans la fonction de déchiffrement TDES⁻¹ qui donne le facteur de conversion BVR déchiffré (8 octets). L'ensemble de données BPR est passé à la fonction de hachage HF qui le transforme en un numéro de données HBP (8 octets) pour l'individu. Le facteur de conversion BVR et le numéro de données HBP qui viennent d'être produits en fonction des données de la carte CC sont entrés tous deux dans une fonction OU-Exclusif XOR dont la sortie est le numéro typique BP (8 octets) attribué à l'individu, utilisable en combinaison avec le numéro secret propre UP (4 octets) pour en obtenir le numéro d'identification personnel PIN (12 octets).

Comme décrit ci-dessus, il peut y avoir d'abord une phase de particularisation ou "personnalisation" de la carte CC, au cours de laquelle celle-ci reçoit les numéros BP et UP. Cependant le numéro secret UP propre à l'individu, qui est usuellement donné de manière aléatoire à l'origine doit en principe pouvoir être modifié par l'individu dans des limites définies. Ensuite est effectuée une phase d'enrôlement, indépendante, qui est consacrée au traitement des données anthropomorphiques et à leur enregistrement dans la carte sous la forme énoncée BPR. Il y a enfin une phase de vérification au cours de laquelle on lit notamment l'ensemble des données BPR et on les compare au données réelles de l'individu qui veut obtenir un accès. Si la comparaison est positive, on lit le facteur de conversion chiffré EBV dans la carte, on le déchiffre en un facteur BVR et on l'utilise suivant le schéma de la figure 8 pour obtenir le numéro typique BP de la carte, attribué en même temps que celle-ci à l'individu.

Le procédé de l'invention permet de mémoriser dans la carte CC, dans un fichier dit public, des informations typiques pour un individu et un facteur de conversion BVR chiffré en EBV, et permet de construire, pour être attribué à l'individu, un numéro typique BP qui se doit d'être pratiquement unique.

Pour des données anthropométriques, la machine M a bien sûr la fonction de vérifier la coïncidence entre ces données pour l'individu qui s'y présente et l'ensemble des données BPR mémorisées dans sa carte.

## Revendications

1. Procédé de protection d'un accès à un domaine sécurisé, en particulier un domaine de données numériques confidentielles dans un système informatique, comprenant une utilisation d'un numéro d'identification personnel (PIN) pour un individu auquel l'accès au domaine est autorisé, ***caractérisé en ce qu'***il comprend,
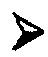 pour la production du numéro d'identification personnel (PIN) :
- une détermination d'un numéro typique (BP) attribué à l'individu,
- une composition d'un numéro secret (UP) propre à l'individu, et
- une combinaison du numéro typique (BP) attribué à l'individu et du numéro secret (UP) de l'individu pour former son numéro d'identification personnel (PIN), et
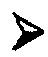 pour l'accès au domaine sécurisé, une vérification dudit numéro d'identification personnel (PIN).

2. Procédé suivant la revendication 1, **caractérisé en ce que** la combinaison consiste en une concaténation du numéro typique (BP) attribué à l'individu et du numéro secret (UP) à la suite l'un de l'autre dans un ordre choisi.

3. Procédé suivant l'une quelconque des revendications 1 et 2, **caractérisé en ce que** le numéro secret (UP) comporte quatre chiffres.

4. Procédé suivant l'une quelconque des revendications 1 à 3, **caractérisé en ce que** la détermination du numéro typique (BP) attribué à l'individu comporte :
- un établissement d'un ensemble de données (BPR) propres à cet individu,
- un traitement de l'ensemble de données (BPR) par une fonction de hachage (HF) choisie pour en obtenir un numéro de données (HBP), propres à l'individu, de huit octets,
- une détermination d'un facteur de conversion (BVR), et
- une combinaison, à l'aide d'une fonction OU-Exclusif (XOR), du numéro de données (HBP) et du facteur de conversion (BVR) pour en obtenir le numéro typique (BP) attribué à l'individu.

5. Procédé suivant la revendication 4, **caractérisé en ce que** les données de l'ensemble de données propres (BPR) sont des données anthropométriques de l'individu.

6. Procédé suivant l'une ou l'autre des revendications 4 et 5, **caractérisé en ce qu'**il comprend :
- un enregistrement de l'ensemble de données (BPR) sur/dans un support (CC) confié à l'individu,
- une attribution d'un numéro d'identification (PID, HID) au support (CC),
- une sélection d'une valeur secrète principale (MBP),
- une sélection d'une fonction à sens unique (OWF1) dans laquelle sont entrées la valeur secrète principale (MBP) et le numéro d'identification (PID, HID) du support (CC) et dont le résultat est ledit numéro typique (BP) attribué à l'individu,
- une combinaison, à l'aide d'une fonction OU-Exclusif (XOR), des numéro typique (BP) et numéro de données (HBP) de l'individu pour en obtenir le facteur de conversion (BVR) susdit, et
- une utilisation ultérieure dudit facteur de conversion (BVR) pour transformer le numéro de données (HBP) de l'individu en numéro typique (BP) qui lui est attribué.

7. Procédé suivant l'une quelconque des revendications 4 à 6, **caractérisé en ce qu'**il comprend :
- une sélection d'une clé de chiffrement principale (MBK),
- une sélection d'une fonction à sens unique (OWF2) dans laquelle sont entrées la clé de chiffrement principale (MBK) et le numéro d'identification (PID, HID) du support (CC) et dont le résultat est une clé de chiffrement dérivée (DBK), et
- une utilisation de la clé de chiffrement dérivée (DBK) pour chiffrer le facteur de conversion (BVR) en un facteur de conversion chiffré (EBV) et déchiffrer celui-ci.

8. Procédé suivant la revendication 6, **caractérisé en ce qu'**il comprend de plus :
- un enregistrement sur/dans le support (CC) du facteur de conversion chiffré (EBV),
- un déchiffrement, à l'aide de la clé de chiffrement dérivée (DBK), du facteur de conversion chiffré (EBV) enregistré,
- une combinaison dans une fonction OU-Exclusif (XOR) du facteur de conversion déchiffré (BVR) et du numéro de données (HBP) de l'individu,
- une utilisation du résultat de la combinaison en tant que numéro typique (BP) attribué à l'individu, et
- une combinaison de ce numéro typique (BP) attribué à l'individu et de son numéro secret propre (UP) donnant son numéro d'identification personnel (PIN).

9. Procédé de protection d'un accès à un domaine sécurisé, en particulier un domaine de données numériques confidentielles dans un système informatique, comprenant une utilisation d'un numéro d'identification personnel (PIN) pour un individu auquel l'accès au domaine est autorisé, ***caractérisé en ce qu'***il comprend, pour la production du numéro d'identification personnel (PIN) :
- un établissement d'un ensemble de données (BPR) propres à cet individu,
- un enregistrement de l'ensemble de données (BPR) sur/dans un support (CC) confié à l'individu,
- une attribution d'un numéro d'identification (PID, HID) au support (CC),
- un traitement de l'ensemble de données (BPR) par une fonction de hachage (HF) choisie pour en obtenir un numéro de données (HBP), de huit chiffres,
- une sélection d'une valeur secrète principale (MBP),
- une sélection d'une fonction à sens unique (OWF1) dans laquelle sont entrées la valeur secrète principale (MBP) et le numéro d'identification (PID, HID) du support (CC) et dont le résultat est un numéro typique (BP) attribué à l'individu,
- une combinaison, à l'aide d'une fonction OU-Exclusif (XOR), du numéro typique (BP) attribué à l'individu et du numéro de données (HBP) pour en obtenir un facteur de conversion (BVR),
- une utilisation ultérieure dudit facteur de conversion (BVR) pour transformer par une fonction OU-Exclusif (XOR) le numéro de données (HBP) de l'individu en numéro typique (BP) attribué à l'individu, et
- une utilisation dudit numéro typique (BP) comme numéro d'identification personnel (PIN) de l'individu ou pour en former un.

10. Procédé suivant la revendication 9, **caractérisé en ce qu'**il comporte en outre, pour former le numéro d'identification personnel (PIN) de l'individu,
- une composition d'un numéro secret (UP) propre à l'individu, et
- une combinaison du numéro typique (BP) attribué à l'individu et du numéro secret (UP) de l'individu pour former son numéro d'identification personnel (PIN) d'accès au domaine.

11. Procédé suivant l'une ou l'autre des revendications 9 et 10, **caractérisé en ce que** la combinaison consiste en une concaténation du numéro typique (BP) et du numéro secret (UP) à la suite l'un de l'autre dans un ordre choisi.

12. Procédé suivant l'une quelconque des revendications 9 à 11, **caractérisé en ce qu'**il comprend :
- une sélection d'une clé de chiffrement principale (MBK),
- une sélection d'une fonction à sens unique (OWF2) dans laquelle sont entrées la clé de chiffrement principale (MBK) et le numéro d'identification (PID, HID) du support (CC) et dont le résultat est une clé de chiffrement dérivée (DBK),
- une utilisation de la clé de chiffrement dérivée (DBK) pour chiffrer le facteur de conversion (BVR) et en un facteur de conversion chiffré (EBV) et déchiffrer celui-ci,
- un enregistrement du facteur de conversion chiffré (EBV) sur/dans ledit support (CC), et
- un déchiffrement, à l'aide de la clé de chiffrement dérivée (DBK), du facteur de conversion chiffré (EBV) enregistré, pour obtenir le facteur de conversion (BVR) à utiliser.
